# EUROPEAN PATENT APPLICATION

(11) **EP 4 517 532 A1**
(43) Date of publication of application: **05.03.2025**
(21) Application number: 23839747.5
(22) Date of filing: 30.03.2023
(51) Int. Cl.: G06F 11/22, G06F 11/32, G06F 9/451, G06F 3/16

(54) **ELECTRONIC DEVICE AND METHOD FOR PROVIDING STATE INFORMATION**

(30) Priority: 15.07.2022 KR 20220087840; 20.07.2022 KR 20220089950
(71) Applicant: Samsung Electronics Co., Ltd., Suwon-si, Gyeonggi-do 16677 (KR)
(72) Inventor: CHOI, Gwangho, Suwon-si Gyeonggi-do 16677 (KR); MOON, Hanul, Suwon-si Gyeonggi-do 16677 (KR)
(74) Representative: Gulde & Partner
(86) International application number: PCT/KR2023/004313
(87) International publication number: WO 2024/014653

(57) **Abstract**

An electronic device includes: at least one processor, a distance detection sensor, a display, and a memory configured to store instructions. The at least one processor is configured to perform at least one of operations according to embodiments. The at least one processor is configured to: receive, through the distance detection sensor, second signals from which a first signal transmitted through the distance detection sensor is reflected. The at least one processor is configured to identify whether a crosstalk by a window of a housing of the electronic device is detected based on intensity values of the second signals measured in distance areas of the distance detection sensor. The at least one processor is configured to provide a first notification indicating that the housing has been normally assembled based on identifying that the crosstalk by the window is detected. The at least one processor is configured to provide a second notification indicating that the housing is not normally assembled based on identifying that the crosstalk by the window is not detected.

## Description

### BACKGROUND

### Field

The disclosure relates to an electronic device and a method for providing state information.

### Description of Related Art

An electronic device may identify a distance from an external object through a distance detection sensor. The electronic device may determine which camera to use based on the distance from the external object. In case the electronic device is reassembled, in order to increase the accuracy of the distance detection sensor, when assembling a housing of the electronic device, calibration for the distance detection sensor may be performed.

### SUMMARY

According to an example embodiment, an electronic device may comprise at least one processor; a distance detection sensor; a display; and a memory configured to store instructions. The at least one processor, when the instructions are executed, may be configured to perform at least one of operations according to embodiments. The at least one processor, may be configured to receive, through the distance detection sensor, second signals from which the first signal transmitted through the distance detection sensor is reflected. The at least one processor, may be configured to identify whether a crosstalk by a window of a housing of the electronic device is detected based on intensity values of the second signals measured in distance areas of the distance detection sensor. The at least one processor, may be configured to provide a first notification indicating that the housing has been normally assembled based on identifying that the crosstalk by the window is detected. The at least one processor, may be configured to provide a second notification indicating that the housing is not normally assembled based on identifying that the crosstalk by the window is not detected.

According to an example embodiment, a method performed by an electronic device, may comprise receiving, second signals from which the first signal transmitted through the distance detection sensor of the electronic device is reflected. The method may comprise identifying whether a crosstalk by a window of a housing of the electronic device is detected based on intensity values of the second signals measured in distance areas of the distance detection sensor. The method may comprise providing a first notification indicating that the housing has been normally assembled based on identifying that the crosstalk by the window is detected. The method may comprise identifying providing a second notification indicating that the housing is not normally assembled based on identifying that the crosstalk by the window is not detected.

According to an example embodiment, an electronic device may comprise at least one processor; a distance detection sensor; a display; and a memory configured to store instructions. The at least one processor, when the instructions are executed, may be configured to perform at least one of operations according to embodiments. The at least one processor may be configured to identify that at least one condition among one or more check conditions for detecting a failure of a calibration state check for the distance detection sensor is satisfied. The at least one processor may be configured to display, through the display, a notification to guide an action based on the at least one condition. The one or more check conditions may include a first condition in which a communication connection with the distance detection sensor is abnormal. The one or more check conditions may include a second condition in which an ambient value being equal to or greater than a first threshold is detected. The one or more check conditions may include a third condition in which a peak signal being less than a second threshold is detected in response to a calibration error for the distance detection sensor. The one or more check conditions may include a fourth condition in which a peak signal being equal to or greater than the second threshold is detected in response to the calibration error for the distance detection sensor. The one or more check conditions may include a fifth condition in which a peak signal being equal to or greater than a third threshold is detected in response to a calibration of the distance detection sensor. The one or more check conditions may include at least one of the first condition, the second condition, the third condition, the fourth condition, or the fifth condition. The calibration may perform based on a first signal transmitted through the distance detection sensor and second signals from which the first signal is reflected.

According to an example embodiment, a method performed by the electronic device may include identifying that at least one condition among one or more check conditions for detecting a failure of a calibration state check for the distance detection sensor of the electronic device is satisfied. The method may include displaying, through the display, a notification to guide an action based on the at least one condition. The one or more check conditions may include a first condition in which a communication connection with the distance detection sensor is abnormal. The one or more check conditions may include a second condition in which an ambient value being equal to or greater than a first threshold is detected. The one or more check conditions may include a third condition in which a peak signal being less than a second threshold is detected in response to a calibration error for the distance detection sensor. The one or more check conditions may include a fourth condition in which a peak signal being equal to or greater than the second threshold is detected in response to the calibration error for the distance detection sensor. The one or more check conditions may include a fifth condition in which a peak signal being equal to or greater than a third threshold is detected in response to a calibration of the distance detection sensor. The one or more check conditions may include at least one of the first condition, the second condition, the third condition, the fourth condition, or the fifth condition. The calibration may perform based on a first signal transmitted through the distance detection sensor and second signals from which the first signal is reflected.

### BRIEF DESCRIPTION OF THE DRAWINGS

The above and other aspects, features and advantages of certain embodiments of the present disclosure will be more apparent from the following detailed description, taken in conjunction with the accompanying drawings, in which:
FIG. 1 is a block diagram illustrating an example electronic device in a network environment according to various embodiments;
FIG. 2 is a block diagram illustrating an example configuration of an electronic device according to various embodiments;
FIG. 3 is a diagram illustrating an example of a distance detection sensor of an electronic device according to various embodiments;
FIG. 4A is a graph illustrating an example measurement result of a distance detection sensor according to various embodiments;
FIG. 4B is a graph illustrating an example measurement result of a distance detection sensor according to various embodiments;
FIG. 5 is a diagram illustrating an example of a crosstalk of a distance detection sensor according to various embodiments;
FIG. 6 is a flowchart illustrating an example operation of an electronic device for identifying normal assembly of a housing according to various embodiments;
FIG. 7 is a flowchart illustrating an example operation of an electronic device for identifying a normal light source environment according to various embodiments;
FIG. 8 is a diagram illustrating an example of a user interface (UI) for an application for a calibration state check according to various embodiments;
FIG. 9A is a diagram illustrating an example of a UI indicating that a connector assembly state is defective in an application for a calibration state check according to various embodiments;
FIG. 9B is a diagram illustrating an example of a UI indicating obstacle detection in an application for a calibration state check according to various embodiments;
FIG. 10A is a graph illustrating an example of crosstalk detection in an obstacle environment according to various embodiments;
FIG. 10B is a diagram illustrating an example of a UI indicating un-assembly of a housing in an application for a calibration state check according to various embodiments;
FIG. 11 is a diagram illustrating an example of passing a calibration state check according to various embodiments; and
FIG. 12 is a flowchart illustrating an example operation of an electronic device for a calibration state check according to various embodiments.

### DETAILED DESCRIPTION

Terms used in the present disclosure are used to describe various example embodiments, and are not intended to limit the scope of the disclosure. A singular expression may include a plural expression unless it is clearly meant differently in the context. The terms used herein, including a technical or scientific term, may have the same meaning as generally understood by a person having ordinary knowledge in the technical field described in the present disclosure. Terms defined in a general dictionary among the terms used in the present disclosure may be interpreted with the same or similar meaning as a contextual meaning of related technology, and unless clearly defined in the present disclosure, it should not be interpreted to have an ideal or excessively formal meaning. In some cases, even terms defined in the present disclosure should not be interpreted to exclude embodiments of the present disclosure.

In various embodiments of the present disclosure described below, a hardware approach is described as an example. However, since the various embodiments of the present disclosure include technology that use both hardware and software, the various embodiments of the present disclosure do not exclude a software-based approach.

A term referring to a signal (e.g., first signal, second signal, transmission signal, reception signal, calibration signal), a term for an operational state (e.g., step, operation, procedure), a term referring to a channel, a term referring to network entity, a term referring to a component of a device, and the like used in the following description are examples used for convenience of description. Thus, the present disclosure is not limited to terms described below, and another term having an equivalent technical meaning may be used.

A term referring to a component of an electronic device (e.g., module, antenna, antenna element, circuit, processor, chip, component, device) used in the following description are examples used for convenience of description. Accordingly, the present disclosure is not limited to terms described below, and another term having an equivalent technical meaning may be used. In addition, a term such as '...part', '...er', '... material', '...body', and the like used below may refer, for example, to at least one shape structure, or may refer, for example, to a unit that processes a function.

In addition, in the present disclosure, in order to determine whether a specific condition is satisfied or fulfilled, an expression of more than or less than may be used, but this is simply a description for expressing an example, and does not exclude description of more than or equal to or less than or equal to. A condition described as 'more than or equal to' may be replaced with ' more than', a condition described as 'less than or equal to' may be replaced with 'less than', and a condition described as 'more than or equal to and less than' may be replaced with 'more than and less than or equal to'. In addition, hereinafter, 'A' to 'B' may refer to at least one of elements from A (including A) and to B (including B).

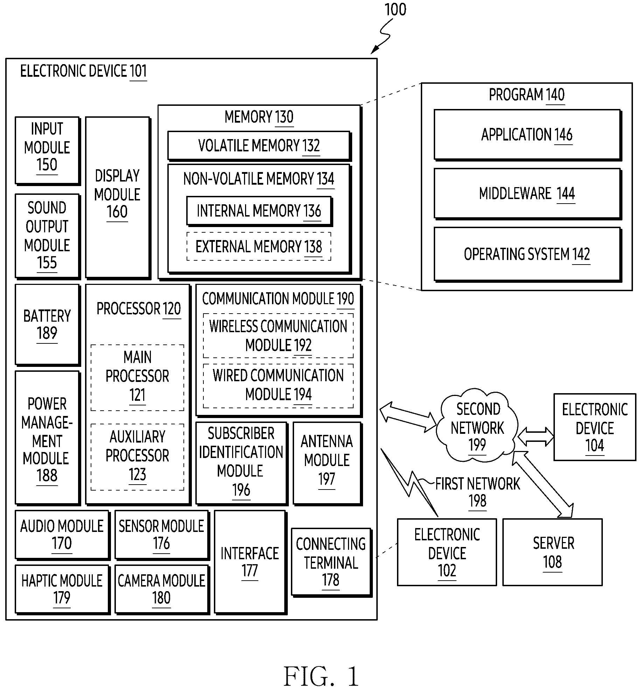

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

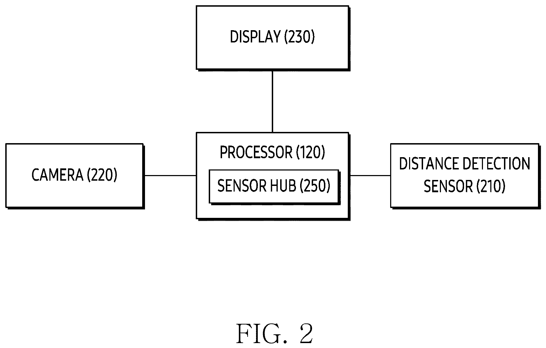

FIG. 2 is a block diagram illustrating an example configuration of an electronic device according to various embodiments.

Referring to FIG. 2, the electronic device (e.g., an electronic device 101 of FIG. 1) may include a processor (e.g., a processor 120 of FIG. 1 including processing circuitry), a distance detection sensor 210, a camera 220, and a display 230.

The electronic device 101 may include the processor 120 including various processing circuitry. The processor 120 may be implemented with one or more integrated circuit (IC) chips and may execute various data processes. For example, the processor 120 may be implemented as a system on chip (SoC). The processor 120 may include sub-components including a central processing unit (CPU), a graphics processing unit (GPU), a neural processing unit (NPU), an image signal processor (ISP), a display controller, a memory controller, a storage controller, an application processor (AP), a communication processor (CP), and/or a sensor interface. The sub-components are merely examples. For example, the processor 120 may further include other sub-components. For example, some sub-components may be omitted from the processor 120. According to an embodiment, the processor 120 may include a sensor hub 250. The sensor hub 250 may control overall driving of a sensor module (e.g., a sensor module 176 of FIG. 1) of the electronic device 101. For example, the sensor hub 250 may include a display luminance table. The processor 120 may obtain a lux value from an illuminance sensor. In an embodiment, the processor 120 may transmit a signal by controlling the distance detection sensor 210 to be described later. The processor 120 may measure a distance by obtaining the signals from which the transmitted signal is reflected.

The electronic device 101 may include the distance detection sensor 210. The distance detection sensor 210 may include a time of flight (TOF) sensor. The distance detection sensor 210 is a sensor that measures an ambient distance, and may output the distance by emitting infrared (IR) and calculating a time when light is returned. The distance detection sensor 210 may include a light emitting unit and a light receiving unit. The distance detection sensor 210 may include the light emitting unit. The light emitting unit of the distance detection sensor 210 may emit a light source of a specific frequency in order to detect the distance. The distance detection sensor 210 may include the light receiving unit. The light receiving unit of the distance detection sensor 210 may detect light of the specific frequency. The distance detection sensor 210 may calculate the distance based on the detected light. The distance detection sensor 210 may output the calculated distance. For example, the distance detection sensor 210 may use a wavelength of 940nm (nano meter) or 1400nm. Hereinafter, in the present disclosure, the distance detection sensor 210 is described as including both the light emitting unit and the light receiving unit, in other words, a transmission unit and a reception unit, but embodiments of the present disclosure are not limited thereto. According to an embodiment, the light emitting unit and the light receiving unit for distance detection may be implemented as a separate component.

The light emitting unit of the distance detection sensor 210 may transmit a first signal. The light receiving unit of the distance detection sensor 210 may receive second signals from which the first signal is reflected. The first signal may correspond to an electromagnetic wave of the specific frequency. The distance detection sensor 210 may output the distance determined based on the second signal that the first signal has been reflected back. According to an embodiment, the distance detection sensor 205 may be a Direct time of flight (DTOF) sensor. The distance detection sensor 205 may transmit the first signal and receive the second signal reflected by an external object in order to determine the distance from the external object based on a time interval between transmitting the first signal and receiving the second signal. According to an embodiment, the distance detection sensor 210 may be an Indirect time of flight (ITOF) sensor. The distance detection sensor 205 may determine the distance from the external object based on a difference between a phase of the first signal and a phase of the second signal.

Hereinafter, in the present disclosure, a TOF sensor is illustrated, by way of example, as the distance detection sensor 210, but descriptions of the distance detection sensor 210 may be applied substantially the same to another type of sensors that perform the same function as the TOF sensor. For example, the distance detection sensor may be a depth sensor. For example, the depth sensor may be a light detection and ranging (LiDAR) sensor. For example, the depth sensor may be a radar sensor.

The electronic device 101 may include at least one camera 220 (e.g., a camera module 180 of FIG. 1). For example, the at least one camera 220 may include at least one of a wide camera, an ultra-wide camera, a first telephoto camera, or a second telephoto camera. The wide camera may be used to obtain an image of the object positioned at a certain distance (e.g., 28cm (centimeter) or more) from the electronic device 101 at a low magnification (e.g., less than 3-magnification). The ultra-wide camera may be used to obtain the image of the object positioned less than the certain distance from the electronic device 101 at the low magnification. The first telephoto camera may be used to obtain the image of the object in a first magnification range (e.g., equal to or greater than 3-magnification and less than 10-magnification). The second telephoto camera may be used to obtain the image of the object in a second magnification range (e.g., equal to or greater than 10-magnification and less than 15-magnification).

The electronic device 101 may include the display 230 (e.g., a display module 160 of FIG. 1). The display 230 may visually provide information to a user. The display 230 may display a user interface (UI) for the application being executed in the processor 120 under the control of the processor 120. According to an embodiment, the display 230 may display state information related to calibration of the distance detection sensor 210.

The user may perform self-repair of the electronic device 101. The electronic device 101 may support a function related to the self-repair. After the self-repair, the calibration of the sensor (e.g., the distance detection sensor 210) of the electronic device 101 may be required. However, if a housing (e.g., a backglass) of the electronic device 101 is not normally assembled or an obstacle is positioned near the sensor (e.g., the distance detection sensor 210), it is difficult to perform the calibration normally. For example, in case miscalibration is performed, the electronic device 101 may determine that there is the object in front of the sensor even though there is no obstacle in front of the sensor. For example, the electronic device 101 may identify a camera to be used among the at least one camera 220 according to an output result of the distance detection sensor 210. A malfunction of the distance detection sensor 210 may cause unnecessary camera switching. For example, the electronic device 101 may switch the camera to the ultra-wide camera even though the object is not adjacent to the distance detection sensor 210. In other words, the unnecessary camera switching may occur due to the wrong determination of the distance detection sensor 210. Thus, according to the disclosure, the electronic device 101 may include a method for providing the state information obtained from a calibration process performed after the self-repair to the user in order to reduce the influence due to the miscalibration of the sensor.

The electronic device 101 according to embodiments may provide appropriate information for each step for normal repair and evaluation when the user self-repairs the electronic device. The electronic device 101 may provide an appropriate guide to the user. The user may identify and check an environmental condition, a state of the electronic device, and the like, even without professional knowledge. According to an embodiment, the electronic device 101 may provide a notification about an assembly state of the housing (e.g., the backglass) of the electronic device 101 to the user through the user interface (UI) or a voice signal. In addition, according to an embodiment, the electronic device 101 may provide the UI or the voice signal to the user to control environmental elements (e.g., sensor communication, ambient, adjacent object) that may occur during the calibration process.

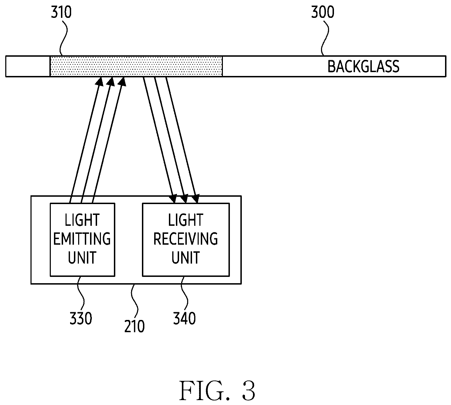

FIG. 3 is a diagram illustrating an example of a distance detection sensor of an electronic device according to various embodiments. The electronic device (e.g., an electronic device 101 of FIG. 1) may include a body and a housing coupled to the body. For example, in addition, the distance detection sensor (e.g., a distance detection sensor 210 of FIG. 2) of the electronic device 101 may be disposed to obtain a distance to an object positioned in a specified direction (e.g., a rear direction). A camera (e.g., at least one camera 220 of FIG. 2) of the electronic device 101 may be disposed to obtain an image of the object positioned in the specified direction (e.g., the rear direction).

Referring to FIG. 3, repair of the electronic device 101 may be performed while a housing 300 is removed. After the repair, assembly of the housing 300 of the electronic device 101 is required for use of the electronic device 101. The housing 300 may be coupled to a main body of the electronic device 101. According to an embodiment, the housing 300 may include a backgalss. In this case, the housing 300 may be disposed such that a signal direction of the distance detection sensor 210 passes through one surface of the housing 300. The housing 300 may be disposed such that a photographing direction of the at least one camera 220 passes through the one surface of the housing 300.

A partial area of the housing 300 of the electronic device 101 may include a window 310. The window 310 may be formed along the one surface of the housing 300. The window 310 may be disposed such that the signal direction of the distance detection sensor 210 passes through the window 310. The window 310 may be disposed such that the photographing direction of the at least one camera 220 passes through the window 310. The window 310 may be made of a passable (e.g., transmissible) material so that the signal transmitted from the distance detection sensor 210 is not blocked by the housing 300. For example, the window 310 may be made of a glass material.

The distance detection sensor 210 may include a light emitting unit (e.g., including a light emitting portion and circuitry) 330 and a light receiving unit (e.g., including a light receiving portion and circuitry) 340. The distance detection sensor 210 may include the light emitting unit 330. The distance detection sensor 210 may transmit a first signal through the light emitting unit 330. The first signal may include light corresponding to a specific frequency. The distance detection sensor 210 may include the light receiving unit 340. The distance detection sensor 210 may receive second signals from which the first signal is reflected through the light receiving unit 340. The first signal may be reflected by the window 310. After the assembly of the electronic device 101 is completed, the housing 300 may be fixed. Accordingly, a position of the window 310 may be fixed. A positional relationship of the window 310 with respect to the distance detection sensor 210 is fixed. Thus, in response to the first signal of the distance detection sensor 210, a pattern of signals reflected from the window 310 may be fixed. According to an embodiment, the electronic device 101 may detect a crosstalk of the window 310 through the pattern of the signals reflected from the window 310.

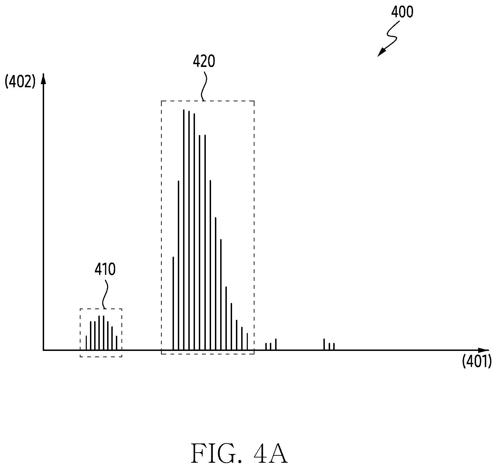

FIG. 4A is a graph illustrating an example of a measurement result of a distance detection sensor according to various embodiments. The distance detection sensor (e.g., a distance detection sensor 210 of FIG. 2) may include a plurality of distance areas. For example, the distance detection sensor 210 may include 64 distance areas. In one distance area, a light receiving unit (e.g., a light receiving unit 340) may receive a second signal from which a first signal emitted by a light emitting unit (e.g., a light emitting unit 330) is reflected. The distance detection sensor 210 may measure the received second signals in the plurality of distance areas of the light receiving unit.

Referring to FIG. 4A, a histogram 400 represents a single-photon avalanche diode (SPAD) counts (e.g., the number of SPADs) per time of the distance detection sensor 210. A horizontal axis 401 of the histogram 400 represents time, and a vertical axis 402 of the histogram 400 represents SPAD counts (unit: kilo count per second (KCPS)). Since the SPAD counts represents the number of photons of the reflected signal, it may refer, for example, to the intensity of the reflected signal.

A bin 410 represents the SPAD counts for the signals reflected by a window (e.g., a window 310 of FIG. 3) of a housing (e.g., a housing 300 of FIG. 3). A bin 420 represents the SPAD counts for the signals reflected by an external object (e.g., an object positioned at a distance of 15 cm). Since the distance between the distance detection sensor 210 and the window 310 is shorter than the distance between the distance detection sensor 210 and the external object, the light receiving unit of the distance detection sensor 210 may receive the signals reflected from the window 310 before the signals reflected from the external object. The bin 410 may precede the bin 420 in time. In addition, since the window 310 is configured with a material (e.g., glass) for passing the signal, a reflection effect is relatively lower than that of the external object. Thus, the SPAD counts in the bin 410 is lower than the SPAD counts in the bin 420.

After assembly of the electronic device 101 is completed, since the housing 300 and the window 310 may be fixed, a reception pattern of the signals reflected from the window 310 may be fixed in response to the first signal of the distance detection sensor 210. According to an embodiment, the distance detection sensor 210 may identify a specific type of a crosstalk within a specified time range. The distance detection sensor 210 may identify that the assembly of the housing 300 is normal by identifying a bin (e.g., the bin 410) detected within the specified time range.

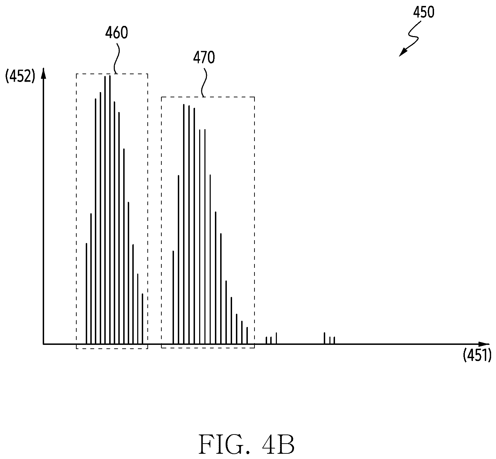

FIG. 4B is a graph illustrating an example of a measurement result of a distance detection sensor according to various embodiments. The distance detection sensor (e.g., a distance detection sensor 210 of FIG. 2) may include a plurality of distance areas. For example, the distance detection sensor 210 may include 64 distance areas. In one distance area, a light receiving unit (e.g., a light receiving unit 340) may receive a second signal from which a first signal emitted by a light emitting unit (e.g., a light emitting unit 330) is reflected. The distance detection sensor 210 may measure the received second signals in the plurality of distance areas of the light receiving unit.

Referring to FIG. 4B, a histogram 450 represents SPAD counts per time of the distance detection sensor 210. A horizontal axis 451 of the histogram 450 represents time, and a vertical axis 452 of the histogram 450 represents the SPAD counts (unit: KCPS).

A bin 460 represents the SPAD counts for signals reflected by a first external object (e.g., an object positioned at a distance of 10 cm). A bin 470 represents the SPAD counts for signals reflected by a second external object (e.g., an object positioned at a distance of 15 cm). The first external object may be positioned closer to the distance detection sensor 210 of an electronic device 101 than the second external object. Thus, the light receiving unit of the distance detection sensor 210 may receive signals reflected from the first external object before signals reflected from the second external object. The bin 460 may precede the bin 470 in time.

Since the first external object is generally configured with a material different from the window 310 passing signals, a relatively large amount of signals may be reflected. Meanwhile, in the window 310 of a histogram 400, the intensity of light received by the light receiving unit of the distance detection sensor 210 is relatively small. Comparing the histogram 400 and the histogram 450, the SPAD counts in the bin 460 may be detected to be greater than the SPAD counts in a bin 410. According to an embodiment, the distance detection sensor 210 may distinguish whether the measurement result is a crosstalk by the window 310 or a reflection pattern by an adjacent external object, based on the SPAD counts. The distance detection sensor 210 may identify that assembly of a housing 300 is normal by identifying a bin (e.g., the bin 410) having SPAD counts less than or equal to a threshold within a specified time range.

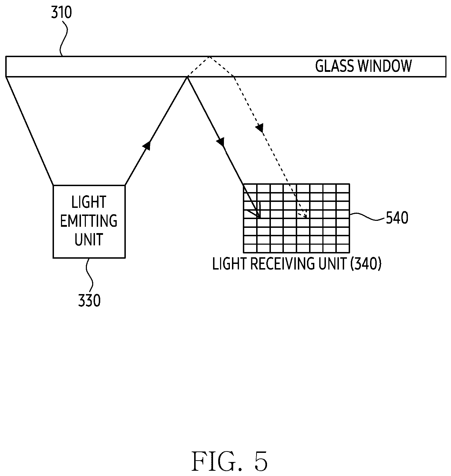

FIG. 5 is a diagram illustrating an example of a crosstalk of a distance detection sensor according to various embodiments. The distance detection sensor (e.g., a distance detection sensor 210 of FIG. 2) may include a plurality of distance areas. For example, the distance detection sensor 210 may include 64 distance areas. In one distance area, a light receiving unit (e.g., a light receiving unit 340) may receive a second signal from which a first signal emitted by a light emitting unit (e.g., a light emitting unit 330) is reflected. The distance detection sensor 210 may measure the received second signals in the plurality of distance areas of the light receiving unit.

Referring to FIG. 5, a window 310 may be disposed to have a specific airgap with a distance detection sensor 210. After assembly of the electronic device 101 is completed, a housing 300 may be fixed. Accordingly, a position of the window 310 may be fixed. Thus, the crosstalk by the window 310 may be intensively detected at a specific position.

The distance detection sensor 210 may include the light emitting unit 330 and the light receiving unit 340. The distance detection sensor 210 may include the light emitting unit 330. The distance detection sensor 210 may transmit the first signal through the light emitting unit 330. The distance detection sensor 210 may include the light receiving unit 340. The distance detection sensor 210 may receive the second signals which the first signal is reflected from the window 310, through the light receiving unit 340. The light receiving unit 340 of the distance detection sensor 210 may include a plurality of distance areas 540. For example, the number of the plurality of distance areas 540 may be 64. In one distance area, the light receiving unit 340 may receive the second signal from which the first signal emitted by the light emitting unit 330 is reflected. For example, a measurement result in the plurality of distance areas 540 are shown in the table below.

**[Table 1]**

| | | | | | | | |
|---|---|---|---|---|---|---|---|
| 79 | 72 | 67 | 67 | 57 | 53 | 49 | 45 |
| 88 | 81 | 72 | 65 | 60 | 56 | 54 | 50 |
| 95 | 84 | 75 | 68 | 63 | 59 | 56 | 55 |
| 100 | 88 | 78 | 71 | 65 | 60 | 59 | 58 |
| 100 | 89 | 78 | 71 | 67 | 62 | 61 | 60 |
| 102 | 89 | 80 | 74 | 67 | 64 | 62 | 62 |
| 98 | 88 | 80 | 72 | 66 | 63 | 60 | 59 |
| 91 | 84 | 76 | 71 | 65 | 60 | 57 | 56 |

The measurement result of Table 1 described above has a different aspect from, simply, the measurement result for signals reflected from an external object at a position separated by an airgap distance. For example, the measurement result of the reflection signal for a first external object positioned at a distance of about 1 cm is as below.

**[Table 2]**

| | | | | | | | |
|---|---|---|---|---|---|---|---|
| 40446 | 31373 | 29292 | 26487 | 24509 | 22436 | 19891 | 17074 |
| 42348 | 37478 | 33177 | 28565 | 25814 | 23455 | 21257 | 18665 |
| 45422 | 39734 | 34893 | 28728 | 25576 | 23221 | 21722 | 19202 |
| 49542 | 43768 | 37215 | 29848 | 24772 | 22714 | 21652 | 19265 |
| 50992 | 43018 | 37727 | 29854 | 25763 | 23196 | 21227 | 18580 |
| 45563 | 39812 | 34141 | 28695 | 24977 | 22390 | 19759 | 17715 |
| 42440 | 36509 | 39180 | 27368 | 24047 | 21754 | 18995 | 16575 |
| 35492 | 29427 | 26932 | 24311 | 22287 | 20033 | 17414 | 15188 |

In addition, for example, the measurement result of the reflection signal for a second external object positioned at a distance of about 15 cm is as below.

**[Table 3]**

| | | | | | | | |
|---|---|---|---|---|---|---|---|
| 895 | 1172 | 1492 | 1384 | 1417 | 1334 | 1113 | 638 |
| 1398 | 1539 | 1605 | 1589 | 1498 | 1432 | 1596 | 1199 |
| 1517 | 1440 | 1651 | 1621 | 1684 | 1595 | 1762 | 1447 |
| 1610 | 1562 | 1875 | 2146 | 2119 | 1783 | 1725 | 1600 |
| 1594 | 1534 | 1902 | 2163 | 2081 | 1659 | 1599 | 1530 |
| 1502 | 1436 | 1701 | 1831 | 1869 | 1646 | 1722 | 1547 |
| 1286 | 1416 | 1574 | 1537 | 1494 | 1565 | 1527 | 1273 |
| 999 | 1356 | 1612 | 1534 | 152 | 1684 | 1442 | 1035 |

Referring to Tables 1, 2, and 3, it is confirmed that the intensity of the signals reflected from the window 310 is relatively smaller than that of the signals reflected from the external object (e.g., the first external object, the second external object). This is because the window 310 is configured with a material (e.g., glass) that is easier to pass through than the external object. In addition, referring to Tables 2 and 3, it is confirmed that the intensity of the signals reflected from a near positioned external object (e.g., the first external object about 1 cm away from the distance detection sensor 210) is greater than the intensity of the signals reflected from a distant positioned external object (e.g., the second external object about 15 cm away from the distance detection sensor 210). This is because, the signal is reflected at the closer position, the less the propagation loss. Referring to Table 1, among the 64 distance areas, the distance areas having strong intensity (e.g., 100, 100, 88, and 89) are positioned in the left middle area. Referring to Table 2, among the 64 distance areas, the distance areas having strong intensity (e.g., 49542, 50992, 43768, and 43018) are positioned in the left middle area. In other words, in case the external object is positioned at a very close position, the shape of the measured crosstalk may be similar to the shape of the crosstalk by the window 310. However, when comparing the intensity measured in each distance area, the intensity of the crosstalk by the window 310 is relatively much smaller than the intensity of the reflection signal by the external object.

Referring to Table 3, among the 64 distance areas, the distance areas having strong intensity (e.g., 100, 100, 88, and 89) are positioned in the center area. Although the distance between the light emitting unit 330 and the light receiving unit 340 is only 4 mm, but the distance between the distance detection sensor 210 and the external object is 15 cm, and thus the light which is reflected and entered enters relatively the center of the distance detection sensor 210 more strongly. The light may be relatively weakly detected on the side surface of the distance detection sensor 210.

If it is before the housing 300 is coupled to a main body of the electronic device 101, a crosstalk value of the distance detection sensor 210 may be substantially measured to be close to zero. Since there is no housing 300, the reflection by the window 310 also does not occur. If there is no housing 300, very low values (e.g., 0-10) as a peak value of each distance area of the distance detection sensor 210 may also be measured. Thus, the measurement result in the state where the housing 300 is not assembled may be distinct from the measurement result by reflection from the window 310 (e.g., Table 1), the measurement result (e.g., Table 2) by reflection from the first external object (e.g., the external object about 1 cm away from the distance detection sensor 210), and the measurement result (e.g., Table 3) by reflection from the second external object (e.g., the external object about 15 cm away from the distance detection sensor 210).

Although the housing 300 is assembled to the main body of the electronic device 101, the crosstalk may be detected to be equal to or greater than a threshold. According to an embodiment, the electronic device 101 may identify the presence of a foreign material based on detecting crosstalk equal to or greater than the threshold through the distance detection sensor 210. In addition, the measurement result of the distance detection sensor 210 may have a pattern having high intensity in a part which is not close to the light emitting unit of the distance detection sensor 210 (e.g., sensors positioned in the central area of Table 3). According to an embodiment, the electronic device 101 may identify the presence of the foreign material, if possible, based on the detection of high-intensity signals in the distance areas which are not close to the light emitting unit of the distance detection sensor 210 among the sensors of the distance detection sensor 210.

As illustrated in FIGS. 3, 4A, 4B and 5 and the above descriptions, the electronic device 101 according to embodiments may obtain state information of the housing 300 of the electronic device 101 based on the measurement result of signals received from the distance detection sensor 210. According to an embodiment, the electronic device 101 may identify whether the housing 300 is assembled. According to an embodiment, the electronic device 101 may identify whether the housing 300 is normally assembled to the main body of the electronic device 101. According to an embodiment, the electronic device 101 may identify whether an obstacle exists in front of the distance detection sensor 210. Based on the measurement result, the electronic device 101 may identify whether a user has normally reassembled the housing 300 after self-repair.

By providing the user with the state information about the assembly of the housing 300 (or the window 310), the electronic device 101 enables calibration and the user's check of the state of the electronic device 101. Hereinafter, operations of the electronic device 101 for providing the state information to the user based on the measurement result of the distance detection sensor 210 will be described in greater detail.

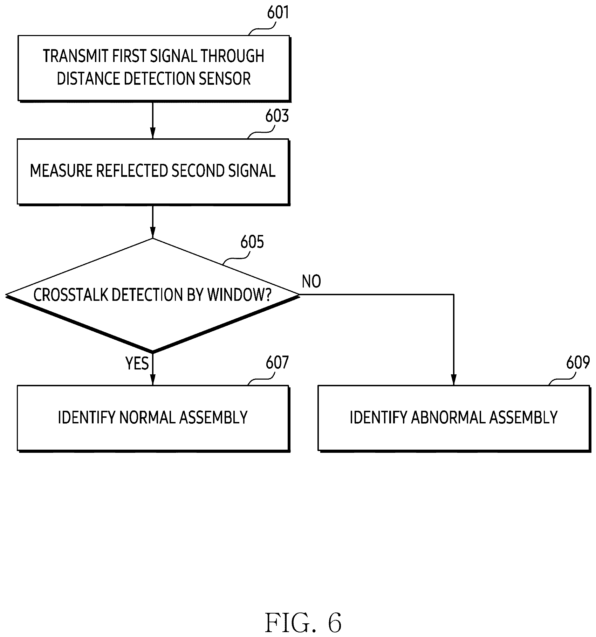

FIG. 6 is a flowchart illustrating an example operation of an electronic device for identifying normal assembly of a housing according to various embodiments. For example, after self-repair of a user, the housing of an electronic device 101 (e.g., a housing 300 of FIG. 3) may be coupled to a main body of the electronic device 101. The electronic device 101 may identify whether the housing 300 is properly assembled. The operations of the electronic device (e.g., the electronic device 101 of FIG. 1) may be performed by a processor (e.g., a processor 120 of FIG. 2).

Referring to FIG. 6, in operation 601, the electronic device 101 may transmit a first signal through a distance detection sensor (e.g., a distance detection sensor 210 of FIG. 2). The electronic device 101 may transmit the first signal through a light emitting unit of the distance detection sensor 210. The first signal may correspond to light of a specific frequency.

In operation 603, the electronic device 101 may measure the reflected second signals. The second signals may be received by a light receiving unit of the distance detection sensor 210 as the first signal is reflected from an object. According to an embodiment, the electronic device 101 may receive the second signals within a specified time after transmitting the first signal. Since the distance between a window 310 and the distance detection sensor 210 corresponds to the airgap between the distance detection sensor 210 and the housing 300, it is shorter than a distance to a general external object. Thus, the signals due to reflection from the window 310 are likely to be received within the specified time from the transmission time point of the first signal. Thus, the electronic device 101 may receive the second signals within the specified time after transmitting the first signal. The electronic device 101 may receive the second signals reflected by the window 310 of the housing of the electronic device 101 (e.g., the housing 300 of FIG. 3). The electronic device 101 may measure the intensity of the received second signals.

In operation 605, the electronic device 101 may identify whether crosstalk by the window 310 is detected.

The electronic device 101 may obtain an intensity value of the second signals measured in each of the distance areas through the light receiving unit (e.g., a light receiving unit 340) of the distance detection sensor 210. The electronic device 101 may identify whether the crosstalk by the window 310 is detected based on the intensity values of the distance areas.

According to an embodiment, the electronic device 101 may identify whether the crosstalk by the window 310 is detected based on the distribution of the intensity values of the distance areas. If the distribution has a tendency that the intensity values of the distance areas close to the light emitting unit (e.g., a light emitting unit 330) are larger than the intensity values of the distance areas farther from the light emitting unit 330, the electronic device may identify that a reflection object is adjacent to the distance detection sensor 210.

According to an embodiment, the electronic device 101 may identify whether the crosstalk by the window 310 is detected based on whether all the intensity value of each of the distance areas is less than the threshold. If the intensity value of each of the distance areas is less than the threshold, the electronic device 101 may identify that the first signal transmitted from the distance detection sensor 210 is reflected by the window 310 not the external object or identify the state where the housing 300 is not assembled to the main body.

For example, if the reflection object is adjacent to the distance detection sensor 210 and all the intensity value of each of the distance areas is less than the threshold, the electronic device 101 may identify that the received second signals are reflected by the window 310. The electronic device 101 may identify that the crosstalk by the window 310 is detected from a measurement result of the distance detection sensor 210.

For example, although the reflection object is adjacent to the distance detection sensor 210, all the intensity value of each of the distance areas may not be less than the threshold. In this case, the electronic device 101 may identify that the external object positioned at an adjacent distance (e.g., about 1 cm) is detected from the measurement result of the distance detection sensor 210. In other words, the electronic device 101 may identify that the crosstalk by the window is not detected. In addition, for example, if the reflection object is not adjacent to the distance detection sensor 210, the electronic device 101 may identify that the external object positioned at the adjacent distance (e.g., about 15 cm) is detected from the measurement result of the distance detection sensor 210. In other words, the electronic device 101 may identify that the crosstalk by the window is not detected.

In case the crosstalk by the window 310 is detected, the electronic device 101 may perform operation 607. In case the crosstalk by the window 310 is not detected, the electronic device 101 may perform operation 609.

In operation 607, the electronic device 101 may identify a normal assembly. Here, the normal assembly may refer, for example, to the assembly between the housing 300 of the electronic device 101 and the main body of the electronic device 101 being normal. For example, the user may separate the housing 300 and the main body of the electronic device 101 and may perform the self-repair. Thereafter, the housing 300 may be reassembled to the main body by the user. In response to the reassembly, calibration of the sensor (e.g., the distance detection sensor 210) may be required.

When the assembly is completed, a relative positional relationship between the housing 300 and the distance detection sensor 210 disposed on the main body of the electronic device 101 is fixed. Thus, the crosstalk by the window 310 measured by the distance detection sensor 210 may occur within an expected range. For example, due to the crosstalk by the window 310, the intensity value of each distance area of the distance detection sensor 210 may be less than the threshold. Due to the crosstalk by the window 310, the intensity values of the distance areas adjacent to the light emitting unit may have a higher intensity distribution than the intensity values of other distance areas. Thus, when the crosstalk by the window 310 is detected, the electronic device 101 may identify that the housing 300 is normally assembled.

In operation 609, the electronic device 101 may identify an abnormal assembly. The relative positional relationship between the distance detection sensor 210 and the housing 300 is fixed. In this case, the abnormal assembly may refer, for example, to the relative positional relationship between the distance detection sensor 210 and the housing 300 in a first state being different from the positional relationship between the distance detection sensor 210 and the housing 300 in a second state. The first state may refer to a state of the electronic device 101 after reassembling the housing 300 according to the self-repair. The second state may refer to a state of the electronic device 101 in which the housing 300 and the main body are coupled before the self-repair.

The electronic device 101 may identify the abnormal assembly based on the measurement result of the distance detection sensor 210. The electronic device 101 may identify the abnormal assembly based on that the crosstalk by the window 310 is not detected. According to an embodiment, the electronic device 101 may identify the presence of a foreign material between the housing 300 and the distance detection sensor 210 based on the measurement result of the distance detection sensor 210. In addition, according to an embodiment, the electronic device 101 may identify that the external object is positioned in the distance detection sensor 210 based on the measurement result of the distance detection sensor 210. In addition, according to an embodiment, the electronic device 101 may identify that the housing 300 is not assembled based on the measurement result of the distance detection sensor 210.

Although not illustrated in FIG. 6, according to an embodiment, the electronic device 101 may provide a notification for indicating an assembly state of the housing 300 to the user. For example, the electronic device 101 may display a message indicating the assembly state of the housing 300 through a display (e.g., a display 230 of FIG. 2). In addition, for example, the electronic device 101 may output a sound signal notifying the assembly state of the housing 300. The notification may indicate the normal assembly, not-assembly, or the presence of the external object. In addition, for example, the electronic device 101 may output a vibration indicating the assembly state of the housing 300. In addition, for example, the electronic device 101 may output an indication notifying the assembly state of the housing 300 through a device (e.g., a lamp). The color of the lamp may indicate the assembly state. For example, a red lamp may indicate that the housing 300 has not been assembled yet. For example, a yellow lamp may indicate that the housing 300 is twisted and assembled.

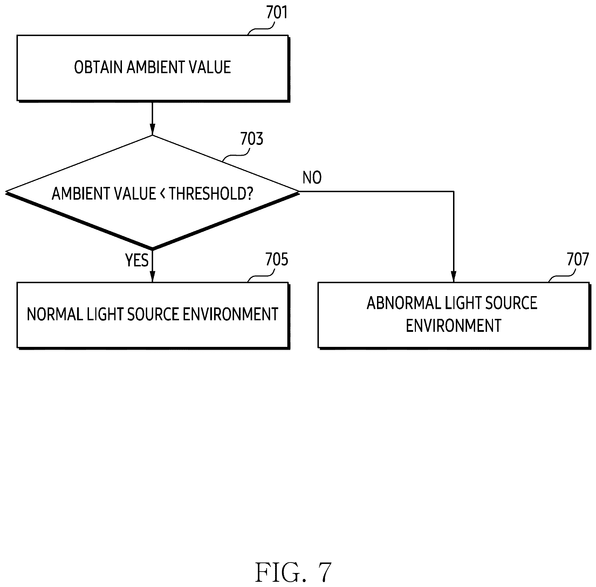

FIG. 7 is a flowchart illustrating an example operation of an electronic device for identifying a normal light source environment according to various embodiments. For example, after self-repair of a user, the housing of an electronic device 101 (e.g., a housing 300 of FIG. 3) may be coupled to a main body of the electronic device 101. The electronic device 101 may identify whether the housing 300 is properly assembled. The operations of the electronic device (e.g., the electronic device 101 of FIG. 1) may be performed by a processor (e.g., a processor 120 of FIG. 2).

Referring to FIG. 7, in operation 701, the electronic device 101 may obtain an ambient value. The electronic device 101 may obtain the ambient value through a light receiving unit (e.g., a light receiving unit 340) of the distance detection sensor 210. The ambient value may refer, for example, to detection intensity of received infrared rays. The user may perform calibration of a sensor (e.g., the distance detection sensor 210) of the electronic device 101. A signal transmitted from the distance detection sensor 210 may be IR. In this case, if a light source including sunlight or the IR is near the electronic device 101, it is difficult to normally perform the calibration of the distance detection sensor 210. The electronic device 101 may measure a noise level in order to identify whether it is a normal environment for the calibration. The electronic device 101 may obtain the ambient value corresponding to the noise level.

In operation 703, the electronic device 101 may identify whether the ambient value is less than a threshold. The threshold may be used to determine whether signals received by the light receiving unit (e.g., the light receiving unit 340 of FIG. 3) of the distance detection sensor 210 are reflected by a signal of a light emitting unit (e.g., a light emitting unit 330 of FIG. 3) of the distance detection sensor 210. A signal intensity by an external IR light source may be stronger than a signal intensity by reflection. For example, in case there is no external IR light source, measurement values in distance areas of the distance detection sensor 210 may be as shown in the table below.

**[Table 4]**

| | | | | | | | |
|---|---|---|---|---|---|---|---|
| 2 | 1 | 2 | 1 | 2 | 0 | 0 | 0 |
| 2 | 3 | 2 | 0 | 4 | 4 | 5 | 0 |
| 0 | 0 | 1 | 2 | 0 | 5 | 2 | 1 |
| 0 | 0 | 2 | 0 | 0 | 5 | 2 | 0 |
| 0 | 0 | 5 | 1 | 0 | 4 | 5 | 1 |
| 0 | 1 | 1 | 0 | 3 | 1 | 0 | 1 |
| 0 | 0 | 7 | 3 | 0 | 2 | 0 | 3 |
| 4 | 1 | 1 | 5 | 2 | 1 | 3 | 2 |

In addition, for example, in case the external IR light source is present, the measurement values in the distance areas of the distance detection sensor 210 may be as shown in the table below.

**[Table 5]**

| | | | | | | | |
|---|---|---|---|---|---|---|---|
| 1201 | 1335 | 1468 | 1597 | 1598 | 1497 | 1359 | 1275 |
| 1476 | 1877 | 2240 | 2502 | 2288 | 2168 | 2028 | 1625 |
| 1709 | 3028 | 5458 | 6300 | 4556 | 3472 | 3037 | 3268 |
| 1950 | 4185 | 7578 | 10390 | 13491 | 10226 | 6410 | 4166 |
| 1971 | 3719 | 8690 | 32729 | 117085 | 68187 | 22002 | 5753 |
| 1886 | 3073 | 7056 | 55655 | 117196 | 98302 | 22954 | 7918 |
| 1697 | 2722 | 3801 | 11892 | 41352 | 11912 | 4637 | 3281 |
| 1569 | 2180 | 2796 | 3248 | 3717 | 3203 | 3053 | 3428 |

Depending on the presence or absence of the external IR light source, a magnitude of the ambient values in the distance areas of the distance detection sensor 210 varies. The electronic device 101 may perform operation 705 in case the ambient value is less than the threshold. The electronic device 101 may perform operation 707 in case the ambient value is not less than the threshold. In the operation 705, the electronic device 101 may identify the normal light source environment. The normal light source environment may refer, for example, to a normal condition to perform calibration of the distance detection sensor 210. The distance detection sensor 210 may measure a distance by emitting a signal of a specific frequency, such as the IR, and measuring a signal from which the signal is reflected. Thus, if there are few factors affecting the specific frequency, the electronic device 101 may identify the normal light source environment.

In the operation 707, the electronic device 101 may identify an abnormal light source environment. The electronic device 101 may determine that the light source including the sunlight or the IR is near the electronic device 101 in case the ambient value is not less than the threshold, in other words, in case the ambient value is equal to or greater than the threshold. In case it is determined that the light source including the sunlight or the IR is near the electronic device 101, the electronic device 101 may identify that it is not a normal environment for calibration.

Although not illustrated in FIG. 7, according to an embodiment, the electronic device 101 may provide a notification for the normal light source environment or the abnormal light source environment to the user. For example, the electronic device 101 may display a message indicating the abnormal light source environment through a display (e.g., a display 230 of FIG. 2). In addition, for example, the electronic device 101 may output a sound signal for notifying the abnormal light source environment. In addition, for example, the electronic device 101 may output vibration indicating the abnormal light source environment of the housing 300. In addition, for example, the electronic device 101 may output an indication notifying the abnormal light source environment of the housing 300 through a device (e.g., a lamp). Meanwhile, according to an embodiment, instead of simply notifying the abnormal light source environment, the electronic device 101 may provide the message, the sound signal, the notification, or the vibration to guide the user to perform calibration after moving to another place. Or, according to an embodiment, in addition to notifying the abnormal light source environment, the electronic device 101 may provide the message, the sound signal, the notification, or the vibration to guide the user to perform calibration after moving to another place.

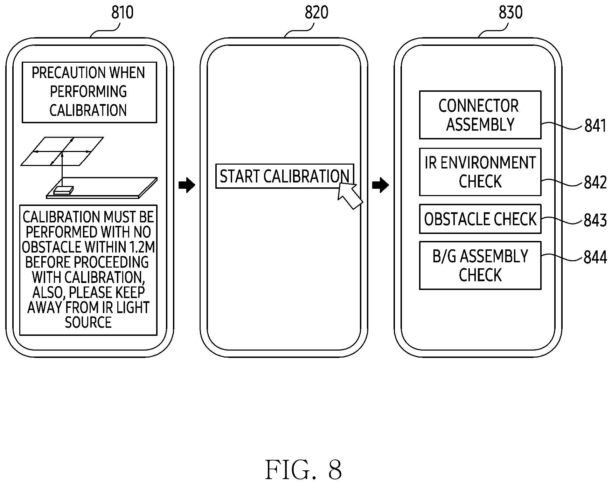

FIG. 8 is a diagram illustrating an example of a user interface (UI) for an application for a calibration state check according to various embodiments. The calibration state check may refer, for example, to a procedure for checking a surrounding environment and/or an internal physical state of an electronic device 101 for performing calibration of a sensor (e.g., a distance detection sensor 210 of FIG. 2) of an electronic device (e.g., an electronic device 101). An application for calibration state check may be executed by a processor (e.g., a processor 120) of the electronic device 101. The processor 120 may display a UI for the application through a display (e.g., a display 230).

Referring to FIG. 8, the electronic device 101 may display a guide screen in a state 810. In order to and/or reduce erroneous calibration from being performed depending on the assembly state when performing the calibration after the self-repair of the user, the electronic device 101 may provide the user with the surrounding environment and/or the internal physical state of the electronic device 101 for performing calibration. The electronic device 101 may display the guide screen notifying a test environment suitable for the state check before the calibration state check. The guide screen may include a message for guiding an environment in which a result of calibration state check of the user is normally output. For example, the guide screen may include the phrase, "Calibration must be performed with no obstacle within 1.2M before proceeding with calibration, also, please keep away from IR light source."

After displaying the guide screen, the electronic device 101 may display a screen for initiating the calibration state check. For example, the electronic device 101 may change the state 810 to a state 820 after a certain period of time has elapsed. For another example, the electronic device 101 may change the state 810 to the state 820 in response to receiving the user input for proceeding to the next step.

In the state 820, the electronic device 101 may display a start screen. In a state 830, the electronic device 101 may display a button object for the calibration state check. The electronic device 101 may change the state 820 to the state 830 in response to receiving the user input. For example, the electronic device 101 may receive a touch input of the button object. The electronic device 101 may change the state 820 to the state 830 in response to the touch input. For another example, the electronic device 101 may change the state 820 to the state 830 after the certain period of time has elapsed.

Initiation of the calibration may be provided to the user through various methods. According to an embodiment, a light-emitting diode (LED) light indicating that the calibration state check is started may be displayed. The user may know that the calibration state check is started through the LED light of the electronic device 101. In addition, according to an embodiment, the initiation of the calibration may be provided to the user through a beep sound. The user may know the initiation of the calibration by hearing the beep sound.

In the state 830, the electronic device 101 may display a check screen. In the state 830, the electronic device 101 may display one or more check items. For example, the one or more check items may include four check items 841, 842, 843, and 844. According to an embodiment, the electronic device 101 may perform all of the one or more check items based on receiving the user input in the state 820. For example, the electronic device 101 may sequentially perform a check operation corresponding to each check item among the four check items 841, 842, 843, and 844. As another example, the electronic device 101 may perform the check operations corresponding to at least two among the four check items 841, 842, 843, and 844 in parallel. In addition, according to an embodiment, the electronic device 101 may perform the check operation corresponding to the specific check item based on receiving an additional input (e.g., a user's touch input) for the specific check item separately from the user input received in the state 820.

According to an embodiment, the electronic device 101 may display the check item 841 related to connector assembly. The check item 841 may display a check result regarding connector assembly. The electronic device 101 may identify whether a connector connecting the distance detection sensor 210 to a flexible printed circuit board (FPCB) or a printed board assembled (PBA) is normally assembled. The electronic device 101 may identify whether the connector to the distance detection sensor 210 is normally connected by identifying whether the communication state of the distance detection sensor 210 is normal. In the normal communication state, the processor 120 of the electronic device 101 may receive a signal from the distance detection sensor 210 or may transmit a signal to the distance detection sensor 210 through a communication interface (e.g., serial peripheral interface (SPI)).

According to an embodiment, the electronic device 101 may display the check item 842 related to an IR environment. The check item 842 may display the check result regarding the IR environment. The electronic device 101 may identify whether the electronic device 101 is currently positioned in a normal light source environment by measuring an ambient value. For operations of the electronic device 101 for check of the IR environment, the description of FIG. 7 may be referred.

According to an embodiment, the electronic device 101 may display the check item 843 related to the obstacle. The check item 843 may display a result of whether the obstacle is positioned around the distance detection sensor 210. The electronic device 101 may identify a distance to an external object by measuring signals from which a signal of the light emitting unit (e.g., the light emitting unit 330) of the distance detection sensor 210 is reflected. The electronic device 101 may identify whether the obstacle is positioned around the distance detection sensor 210 based on the distance to the external object and the intensity distribution of the distance areas in a light receiving unit (e.g., a light receiving unit 340).

According to an embodiment, the electronic device 101 may display the check item 844 related to the housing 300 (e.g., backglass). The check item 844 may display the check result regarding the assembly state of the housing 300. The electronic device 101 may detect the assembly state of the housing 300 by measuring signals from which the signal of the light emitting unit (e.g., the light emitting unit 330) of the distance detection sensor 210 is reflected. The housing 300 may include a window (e.g., a window 310) for the distance detection sensor 210. After the housing 300 is assembled to the body of the electronic device 101, the positional relationship between the window 310 and the distance detection sensor 210 is fixed. Thus, a measurement result for the signals reflected from the window 310 may have a specified pattern. For operations of the electronic device 101 for check for the assembly state of the housing 300, the description of FIG. 6 may be referred to.

In FIG. 8, a state in which four check items (the check item 841, the check item 842, the check item 843, and the check item 844) are displayed on one screen as an example, but embodiments of the present disclosure are not limited thereto. According to an embodiment, the electronic device 101 may not perform all of the check operations corresponding to the four check items, but may perform only some of the check operations among the check operations. Alternatively, according to an embodiment, the electronic device 101 may additionally perform the operation for another check as well as the four check items.

According to an embodiment, the electronic device 101 may display only some of the check items, not display all of the check items to be performed. For example, after the calibration state check, the electronic device 101 may display only check items indicating a negative check result on the screen. In addition, for example, after the calibration state check, the electronic device 101 may display the result of one check item among check items indicating the negative check result on the screen.

Although not illustrated in FIG. 8, the electronic device 101 may provide the result of the check item to the user. For example, the electronic device 101 may display the message indicating the result of the check item through the display (e.g., the display 230 of FIG. 2). In addition, for example, the electronic device 101 may output a sound signal for notifying the result of the check item. In addition, for example, the electronic device 101 may output vibration for notifying the result of the check item. In addition, for example, the electronic device 101 may output a notification from a device (e.g., a lamp) for notifying the result of the check item. Meanwhile, according to an embodiment, instead of simply notifying the result of the check item, the electronic device 101 may provide the message, the sound signal, the vibration, or the notification to the user to guide the next operation. According to an embodiment, in addition to notifying the result of the check item, the electronic device 101 may provide the message or the sound signal to the user to guide the next operation. For example, the message or the sound signal displayed on the display may include the following phrases.
1. "After reassembling the backglass, perform calibration."
2. "Remove the obstacle in front of the device and perform calibration."
3. "Go to an environment without an external light source and perform calibration."
4. "Since the backglass was not detected, after assembling the backglass, perform calibration."

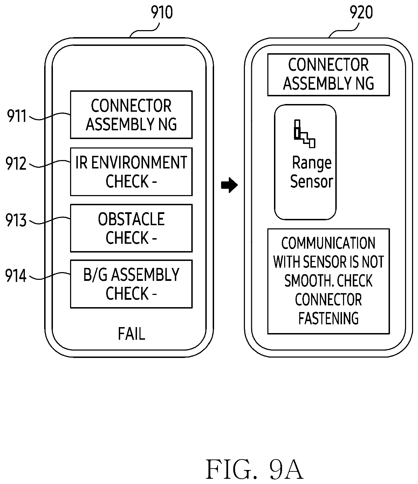

Hereinafter, more detailed examples of the UI according to the result of the calibration state check will be described with reference to FIGS. 9A, 9B, 10A, 10B and 11.

FIG. 9A is a diagram illustrating an example of a UI indicating that a connector assembly state is defective in an application for a calibration state check according to various embodiments. An application for calibration state check may be executed by a processor (e.g., a processor 120) of the electronic device 101. The processor 120 may display a UI for the application through a display (e.g., a display 230). In FIG. 9A, among check items (a check item 841, a check item 842, a check item 843, and a check item 844) of FIG. 8, a situation in which the check result of the check item 841 related to the connector assembly is not good (NG) is described.

Referring to FIG. 9A, in a state 910, the electronic device 101 may display a check screen. In the state 910, the electronic device 101 may display one or more check items. The one or more check items may include a check item 911, a check item 912, a check item 913, and a check item 914. The check item 911, the check item 912, the check item 913, and the check item 914 may correspond to the check item 841, the check item 842, the check item 843, and the check item 844 of FIG. 8, respectively.

The electronic device 101 may perform the check related to the connector assembly of the check item 911. The electronic device 101 may identify a communication state of the connector of a distance detection sensor 210. The electronic device 101 may determine whether a communication connection between the processor 120 and the distance detection sensor 210 is normal through a specified process. In case the communication connection is not normal, the electronic device 101 may determine that the connection of the connector of the distance detection sensor 210 is not good. The electronic device 101 may display a result of the check item 911 as not good (NG). According to an embodiment, the electronic device 101 may perform the check on the connector assembly before other state checks. Since other state checks have not been performed, the electronic device 101 may not display the result of the check item 912, the result of the check item 913, and the result of the check item 914.

After displaying the check screen, the electronic device 101 may display a notification screen to the user. For example, the electronic device 101 may change the state 910 to a state 920 after a certain period of time has elapsed. For another example, the electronic device 101 may change the state 910 to the state 920 in response to receiving the user input for proceeding to the next step.

In the state 920, the electronic device 101 may display the notification screen to the user. The notification screen may display an image object for notifying the user of a component (e.g., a connector) having a problem in connection with the distance detection sensor 210. In addition, the notification screen may display a message for guiding the user's operation on the check result to the user. For example, the message may include a phrase such as "Communication with the sensor is not smooth. Check connector fastening".

The determination of connector assembly may be confirmed through a communication check with the sensor (e.g., the distance detection sensor 210). When the housing 300 (e.g., backglass) is assembled with the main body of the electronic device 101 through the tape, when sensor communication error occurs due to not-assembly or misassembly of the connector, the housing 300 must be removed again. However, since damage to the housing 300 may occur during the process of removal again, it may be safe to check in advance for not-assembly or misassembly of the connector. The user may transmit an input for check of the connector assembly before assembling the housing 300 to the main body. Through the function of the application for the calibration state check, the check on connector assembly of the check item 911 may be performed before the housing 300 is assembled to the main body. However, this description does not exclude that the check on connector assembly is performed by the electronic device 101 after the housing 300 is assembled to the main body.

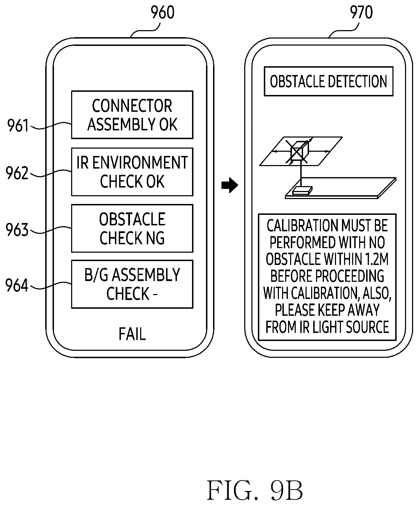

FIG. 9B is a diagram illustrating an example of a UI indicating obstacle detection in an application for a calibration state check according to various embodiments. An application for calibration state check may be executed by a processor (e.g., a processor 120) of the electronic device 101. The processor 120 may display a UI for the application through a display (e.g., a display 230). In FIG. 9B, among check items (a check item 841, a check item 842, a check item 843, and a check item 844) of FIG. 8, a situation in which the check result of the check item 843 regarding obstacle is not good (NG) is described.

Referring to FIG. 9B, in a state 960, the electronic device 101 may display a check screen. In the state 960, the electronic device 101 may display one or more check items. The one or more check items may include a check item 961, a check item 962, a check item 963, and a check item 964. The check item 961, the check item 962, the check item 963, and the check item 964 may correspond to the check item 841, the check item 842, the check item 843, and the check item 844 of FIG. 8, respectively.

The electronic device 101 may display the check result regarding the connector assembly of the check item 961 as 'OK'. A communication connection of a distance detection sensor 210 of the electronic device 101 may be normal. The electronic device 101 may display the check result regarding the IR environment of the check item 962 as 'OK'. The electronic device 101 may be positioned in a normal light source environment. According to the sequential progress of each check item, the electronic device 101 may identify whether an obstacle exists around the distance detection sensor 210.

The electronic device 101 may identify whether crosstalk by the window 310 is detected by measuring signals received through the distance detection sensor 210. According to an embodiment, the electronic device 101 may identify reflection by an external object in case signals are received after a specified time from the time when the distance detection sensor 210 emits the signal. The specified time may be set based on an airgap that is a distance between the window 310 and the distance detection sensor 210. In addition, according to an embodiment, the electronic device 101 may identify reflection by the external object in case the distribution of intensity values measured in the distance areas of the distance detection sensor 210 is highly formed in the center of a light receiving unit (e.g., a light receiving unit 340). In addition, according to an embodiment, even if reflected signals are received within the specified time from the time when the distance detection sensor 210 emits the signal, or the distribution of the intensity values measured in the distance areas is highly formed in the area close to a light emitting unit (e.g., a light emitting unit 330), the electronic device 101 may identify reflection from an external object in case the intensity values (or representative values of the intensity values) are greater than the threshold. The electronic device 101 may identify that the external object exists at a distance similar to the distance to the window 310.

Through the above-described operations, the electronic device 101 may perform the check on the obstacle of the check item 963. The obstacle may refer, for example, to the external object being positioned in the detection range of the distance detection sensor 210. In case the obstacle is detected, the electronic device 101 may display a result of the check item 963 as not good (NG). The check on the connector assembly may be performed before the check on the backglass assembly. The electronic device 101 may not display the result of the check item 964.

After displaying the check screen, the electronic device 101 may display a notification screen to the user. For example, the electronic device 101 may change the state 960 to a state 970 after a certain period of time has elapsed. For another example, the electronic device 101 may change the state 960 to the state 970 in response to receiving the user input for proceeding to the next step.

In state 970, the electronic device 101 may display the notification screen to the user. The notification screen may display an image object for notifying the user that the obstacle is positioned in the detection range of the distance detection sensor 210. In addition, the notification screen may display a message for guiding the user's operation on the check result to the user. For example, the message may include a phrase such as "Obstacles are detected between performing calibrations. Please clear the obstacles and perform".

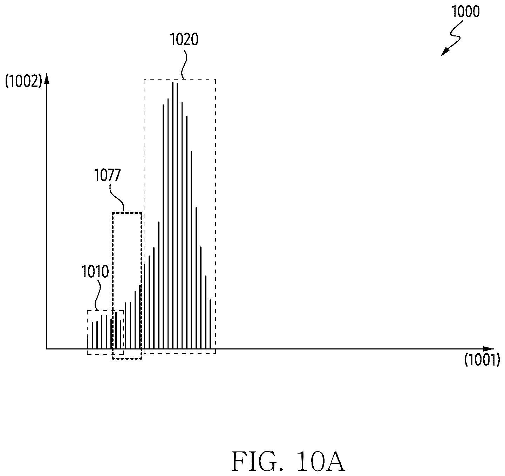

FIG. 10A is a graph illustrating an example of crosstalk detection in an obstacle environment according to various embodiments. In FIG. 10A, a situation in which an external object adjacent to a distance detection sensor (e.g., a distance detection sensor 210 of FIG. 2) of an electronic device (e.g., an electronic device 101) exists is described. The distance detection sensor (e.g., a distance detection sensor 210 of FIG. 2) may include a plurality of distance areas. For example, the distance detection sensor 210 may include 64 distance areas. In one distance area, a light receiving unit (e.g., a light receiving unit 340) may receive a second signal from which a first signal emitted by a light emitting unit (e.g., a light emitting unit 330) is reflected. The distance detection sensor 210 may measure the received second signals in the plurality of distance areas of the light receiving unit.

Referring to FIG. 10A, a histogram 1000 represents SPAD counts per time of the distance detection sensor 210. A horizontal axis 1001 of the histogram 1000 represents time, and a vertical axis 1002 of the histogram 1000 represents the SPAD counts (unit: KCPS).

A bin 1010 represents the SPAD counts of the crosstalk. A bin 1020 represents the SPAD counts for signals reflected by the external object (e.g., an object positioned at a distance of 5 cm). Referring to the histogram 1000, an interference 1077 may be observed due to the external object placed at a close position. The electronic device 101 may determine whether the bin 1010 is the crosstalk by the window 310. Due to the interference 1077, the numerical values of the bin 1010 determined to be the crosstalk by the window 310 may be different from the numerical values of the crosstalk by the general window.

The electronic device 101 may identify whether the bin 1010 and the interference 1077 are caused by overlapping the external object and the window 310 or by the external object without the window 310. According to an embodiment, the electronic device 101 may use the peak signal value of the distance detection sensor 210 to identify whether a certain type of the crosstalk (e.g., the bin 1010) is caused by the window 310. The electronic device 101 may identify whether a housing 300 including the window 310 is not assembled based on identifying whether the peak signal value of the distance detection sensor 210 is less than a threshold. In addition, the electronic device 101 may identify the presence of the external object through the peak signal value equal to or greater than the threshold.

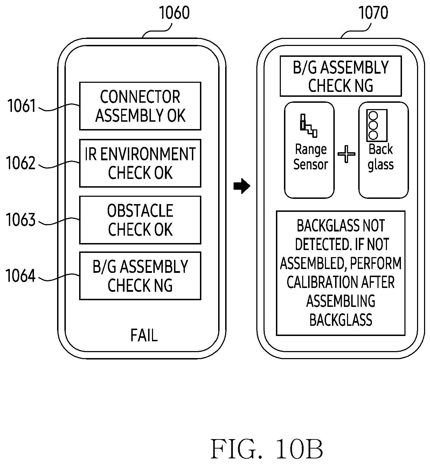

FIG. 10B is a diagram illustrating an example of a UI indicating not-assembly of a housing in an application for a calibration state check according to various embodiments. An application for calibration state check may be executed by a processor (e.g., a processor 120) of the electronic device 101. The processor 120 may display a UI for the application through a display (e.g., a display 230). In FIG. 10B, among the check items (check items 841, 842, 843, and 844) of FIG. 8, a situation in which a check result of the check item 844 regarding the obstacle is not good (NG) is described.

Referring to FIG. 10B, in a state 1060, the electronic device 101 may display a check screen. In the state 1060, the electronic device 101 may display one or more check items. The one or more check items may include a check item 1061, a check item 1062, a check item 1063, and a check item 1064. The check item 1061, the check item 1062, the check item 1063, and the check item 1064 may correspond to the check item 841, the check item 842, the check item 843, and the check item 844 of FIG. 8, respectively.

The electronic device 101 may display the check result regarding the connector assembly of the check item 1061 as 'OK'. A communication connection of a distance detection sensor 210 of the electronic device 101 may be normal. The electronic device 101 may display the check result regarding the IR environment of the check item 1062 as 'OK'. The electronic device 101 may be positioned in a normal light source environment. The electronic device 101 may display the check result regarding the obstacle of the check item 1063 as 'OK'. The obstacle may not be positioned within the detection range of the distance detection sensor 210 of the electronic device 101. According to the sequential progress of each check item, the electronic device 101 may identify whether the housing 300 (e.g., backglass) is assembled.

The electronic device 101 may identify whether crosstalk by the window 310 is detected by measuring signals received through the distance detection sensor 210. According to an embodiment, if intensity values measured in distance areas of the distance detection sensor 210 are less than a threshold, the electronic device 101 may identify whether the result of the intensity values is due to not-assembly of housing 300 or reflection by window 310.

The electronic device 101 may identify peak signals in the distance areas of the distance detection sensor 210. The electronic device 101 may identify whether the housing 300 is not assembled by comparing the intensity values of the peak signals with the threshold. In case the peak signal is less than the threshold, the electronic device 101 may identify that the housing 300 (e.g., backglass) is not assembled. The electronic device 101 may display a result of the check item 1064 as not good (NG).

After displaying the check screen, the electronic device 101 may display a notification screen to the user. For example, the electronic device 101 may change the state 1060 to a state 1070 after a certain period of time has elapsed. For another example, the electronic device 101 may change the state 1060 to the state 1070 in response to receiving the user input for proceeding to the next step.

In the state 1070, the electronic device 101 may display the notification screen to the user. The notification screen may display an image object for indicating that the backglass is not assembled to the user. In addition, the notification screen may display a message for guiding the user's operation on the check result to the user. For example, the message may include a phrase such as "Backglass not detected. If not assembled, perform calibration after assembling the backglass".

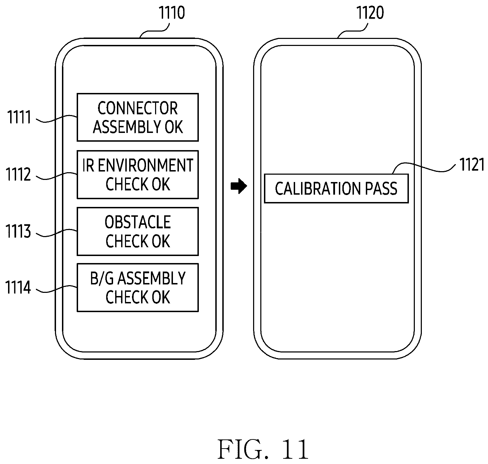

FIG. 11 is a diagram illustrating an example of passing a calibration state check according to various embodiments. An application for calibration state check may be executed by a processor (e.g., a processor 120) of the electronic device 101. The processor 120 may display a UI for the application through a display (e.g., a display 230). In FIG. 11, a situation in which all of the check items (a check item 841, a check item 842, a check item 843, and a check item 844) of FIG. 8 have passed is described.

Referring to FIG. 11, in a state 1110, the electronic device 101 may display a check screen. In the state 1110, the electronic device 101 may display one or more check items. The one or more check items may include a check item 1111, a check item 1112, a check item 1113, and a check item 1114. The check item 1111, the check item 1112, the check item 1113, and the check item 1114 may correspond to the check item 841, the check item 842, the check item 843, and the check item 844 of FIG. 8, respectively.

The electronic device 101 may display the check result regarding the connector assembly of the check item 1111 as 'OK'. A communication connection of a distance detection sensor 210 of the electronic device 101 may be normal. The electronic device 101 may display the check result regarding the IR environment of the check item 1112 as 'OK'. The electronic device 101 may be positioned in a normal light source environment. The electronic device 101 may display the check result regarding the obstacle of the check item 1113 as 'OK'. The obstacle may not be positioned within the detection range of the distance detection sensor 210 of the electronic device 101. The electronic device 101 may display the check result regarding the assembly of the housing 300 (e.g., backglass) of the check item 1114 as 'OK'. The window 310 of the housing 300 may be normally positioned at a position according to assembly.

After displaying the check screen, the electronic device 101 may display a notification screen to the user. For example, the electronic device 101 may change the state 1110 to a state 1120 after a certain period of time has elapsed. For another example, the electronic device 101 may change the state 1110 to the state 1120 in response to receiving the user input for proceeding to the next step. In the state 1120, the electronic device 101 may display a notification screen to the user. The notification screen may display a message 1121 indicating that the calibration state check for the distance detection sensor 210 has passed to the user.

Although not illustrated in FIG. 11, instead of the message indicating that the calibration state check has passed, or in addition to the message, according to an embodiment, the electronic device 101 may output a sound signal indicating that the state check of the calibration for the distance detection sensor 210 has passed. According to an embodiment, the electronic device 101 may output a notification indicating that the calibration state check for the distance detection sensor 210 has passed through a device (e.g., a lamp). For example, a green lamp may indicate that the calibration state check for the distance detection sensor 210 has passed.

In FIGS. 8, 9A, 9B, 10A, 10B and 11, the progress of all steps is displayed, but the state 1110 of FIG. 11 is only an example, and embodiments of the present disclosure are not limited thereto. Considering the user's convenience, the display of "OK" notification may be omitted. According to an embodiment, the electronic device 101 may display the screen of the state 1120 only in case the calibration state check has passed, and may display only a comment about a phenomenon in which a problem occurs otherwise. For example, in case there is a problem in assembling a connector, the electronic device 101 may directly display the screen of the state 920 without displaying the pass/fail screen for each item (e.g., a screen of the state 910).

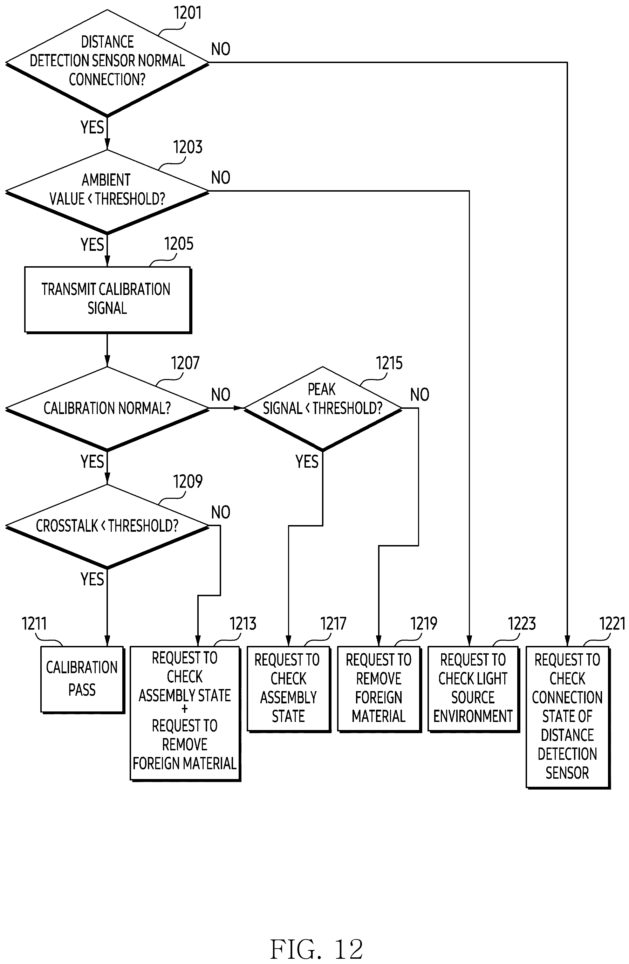

FIG. 12 is a flowchart illustrating an example operation of an electronic device for a calibration state check according to various embodiments. Operations of the electronic device (e.g., an electronic device 101 of FIG. 1) may be performed by a processor (e.g., a processor 120 of FIG. 2).

Referring to FIG. 12, in operation 1201, the electronic device 101 may identify whether the connection of a distance detection sensor (e.g., a distance detection sensor 210) is normal. The electronic device 101 may identify whether the communication state with the distance detection sensor 210 is normal. This is because if the control signal by the processor 120 of the electronic device 101 does not reach the distance detection sensor 210, it is difficult for the operation (e.g., camera switching operation) by the distance detection sensor 210 to be normally performed. For example, if the connector of the distance detection sensor 210 is not normally coupled to FPCB or PBA, the electronic device 101 may determine that the communication state is abnormal.

In case the connection of the distance detection sensor 210 is normal, the electronic device 101 may perform operation 1203. In case the connection of the distance detection sensor 210 is not normal, the electronic device 101 may perform operation 1221.

In the operation 1203, the electronic device 101 may identify whether an ambient value is less than a threshold (e.g., about 35 kcps). The electronic device 101 may identify whether a peripheral light source acting as an interference exists in a signal radiated from the distance detection sensor 210. In case the ambient value is less than the threshold, the electronic device 101 may perform operation 1205. In case the ambient value is equal to or greater than the threshold, the electronic device 101 may perform operation 1223.

In the operation 1205, the electronic device 101 may transmit a calibration signal. The electronic device 101 may perform calibration for the distance detection sensor 210. The electronic device 101 may transmit a first signal through a light emitting unit (e.g., a light emitting unit 330) of the distance detection sensor 210. The first signal may have a specified frequency. The first signal may be used for calibration for the distance detection sensor 210 to be described later.

In operation 1207, the electronic device 101 may identify whether the calibration is normal. The electronic device 101 may receive second signals through a light receiving unit (e.g., a light receiving unit 340) of the distance detection sensor 210. The second signals may be received as the first signal is reflected by an external object or an internal component. The electronic device 101 may receive the second signals from which the first signal is reflected.

The electronic device 101 may measure intensity values of the second signals in a plurality of distance areas of the distance detection sensor 210. The electronic device 101 may identify whether crosstalk is detected based on the intensity values. According to an embodiment, the electronic device 101 may identify whether the crosstalk is detected based on distribution information on the intensity values of the second signals. For example, among the distance areas of the light receiving unit 340, a signal intensity of a distance areas close to the light emitting unit 330 may be formed to be high. The electronic device 101 may identify that crosstalk is detected. The electronic device 101 may identify that the calibration is normal based on identifying that the crosstalk is detected.

In case the calibration is normal, the electronic device 101 may perform operation 1209. The electronic device 101 may perform operation 1215 in case the calibration is not normal, in other words, in case an error is detected in the calibration.

In the operation 1209, the electronic device 101 may identify whether the crosstalk is less than the threshold (e.g., about 200 kcps). The electronic device 101 may determine whether the crosstalk is caused by a foreign material adjacent to the window 310 of the housing 300 or by the window 310. In case the crosstalk is less than the threshold, the electronic device 101 may determine that the crosstalk is caused by the window 310. In case the crosstalk is less than the threshold, the electronic device 101 may perform operation 1211. In case the crosstalk is equal to or greater than the threshold, the electronic device 101 may perform operation 1213.

In the operation 1211, the electronic device 101 may identify that the calibration state check has passed. According to an embodiment, the electronic device 101 may display a notification indicating that the calibration state check has passed through a display. In addition, according to an embodiment, the electronic device 101 may output a sound signal indicating that the calibration state check has passed.

In addition, according to an embodiment, the electronic device 101 may output a vibration indicating that the calibration state check has passed.

In addition, according to an embodiment, the electronic device 101 may output a notification indicating that the calibration state check has passed through a device (e.g., an LED lamp).

In the operation 1213, the electronic device 101 may request confirmation of the assembly state or may request removal of the foreign material. The electronic device 101 may determine that the calibration state check has failed, even though the crosstalk is detected from the measurement result in each distance area.

According to an embodiment, if the intensity of the crosstalk is equal to or greater than the threshold (e.g., about 200 kcps) of the operation 1209, the electronic device 101 may determine that there is an obstacle that blocks the signal transmission of the distance detection sensor 210. The electronic device 101 may provide a message requesting the removal of the foreign material to the user. For example, the electronic device 101 may display the message including the phrase "Wipe the window clean or remove objects in front of the window" through the display (e.g., a display 230).

According to an embodiment, the electronic device 101 may identify that the housing 300 is twistedly assembled when the intensity of the crosstalk is equal to or greater than the threshold (e.g., about 200 kcps) of the operation 1209. Due to the distortion of the housing 300, one surface of the window 310 may not be disposed to face the distance detection sensor 210. Since another area other than the window 310 of the housing 300 is disposed to face the distance detection sensor 210, the measurement intensity values of the second signals may be detected high. Thus, the electronic device 101 may provide the message requesting confirmation of the assembly state to the user. For example, the electronic device 101 may display the message including the phrase "If the backglass is twistedly assembled, reassemble it" through the display (e.g., the display 230).

In the operation 1215, the electronic device 101 may identify whether the intensity of the peak signal is less than the threshold (e.g., about 200 kcps). Here, the intensity of the peak signal may refer, for example, to the peak intensity in each of the distance areas of the distance detection sensor 210. The electronic device 101 may perform operation 1217 in case the peak signal is less than the threshold (e.g., all peak intensity in each of the distance areas are less than the threshold). The electronic device 101 may perform operation 1219 in case the peak signal is not less than the threshold.

In the operation 1217, the electronic device 101 may request confirmation of the assembly state. When the peak signal is less than the threshold (e.g., about 200 kcps), the electronic device 101 may identify that housing 300 is not assembled to the main body. Thus, the electronic device 101 may provide the message requesting confirmation of the assembly state to the user. For example, the electronic device 101 may display the message including the phrase "Check that the backglass is properly assembled." through the display (e.g., the display 230).

In operation 1219, the electronic device 101 may request the removal of the foreign material. If the peak signal is equal to or greater than the threshold (e.g., 200 kcps), the electronic device 101 may identify that an object blocking the progress direction of the calibration signal of the distance detection sensor 210 exists. Thus, the electronic device 101 may provide the message requesting the removal of the foreign material to the user. For example, the electronic device 101 may display the message including the phrase "Wipe the window clean or remove objects in front of the window" through the display (e.g., the display 230).

In operation 1221, the electronic device 101 may request confirmation of the light source environment. The electronic device 101 may identify an abnormal light source environment based on detecting the ambient value equal to or greater than the threshold (about 35 kcps). The electronic device 101 may identify that it is an environment in which a light source that may act as interference exists around the current electronic device 101 (e.g., a sunlight environment, an environment in which an external IR light source exists). The electronic device 101 may determine that the current environment is not suitable for calibration by a signal (e.g., an IR signal) of the distance detection sensor 210. Thus, the electronic device 101 may provide the message requesting confirmation of the light source environment to the user. For example, the electronic device 101 may display the message including the phrase "Perform calibration away from IR light source or sunlight environment" through the display (e.g., the display 230).

In operation 1223, the electronic device 101 may request confirmation of the connection state of the distance detection sensor. In case sensor communication is not normal, the electronic device 101 may identify that the connector assembly state of the distance detection sensor 210 is defective. Thus, the electronic device 101 may provide the message requesting confirmation of the connection state of the distance detection sensor to the user. For example, the electronic device 101 may display the message including the phrase "Check the connector assembly of the distance detection sensor" through the display (e.g., the display 230).

According to an embodiment, the electronic device 101 may identify whether the housing 300 (e.g., backglass) is assembled to the main body of the electronic device 101 by determining whether the value of the peak signal is equal to or greater than the threshold (e.g., 200 kpcs). In addition, even if the housing 300 is assembled, the electronic device 101 may detect whether the object is blocking between the window 310 of the housing 300 and the distance detection sensor 210.

The electronic device and method according to the embodiments may provide convenience after self-repair by the user through an application for calibration. After the self-repair, the user may identify whether the housing and the main body of the electronic device are assembled normally before using the electronic device, and the user may use the electronic device normally based on the check result. By determining the assembly state of the electronic device through the distance detection sensor and providing state information on the electronic device to the user, when the user performs the self-repair, malfunction due to misassembly may not occur or occur less frequently. In addition, the electronic device 101 may primarily determine whether the assembly of the housing 300 is normal based on the shape and numerical value of the detected crosstalk. In addition, regardless of whether or not the housing 300 is assembled, through the function of the application (e.g., checking the sensor communication state), it is possible to detect not-assembly or misassembly of the connector for the distance detection sensor 210.

In various example embodiments of the present disclosure, an electronic device may comprise: at least one processor, a distance detection sensor, a display, and a memory configured to store instructions. The at least one processor, when the instructions are executed, may be configured to perform at least one of operations according to embodiments. The at least one processor 120 may be configured to receive, through the distance detection sensor 210, second signals from which the first signal transmitted through the distance detection sensor 210 is reflected. The at least one processor 120 may be configured to identify whether a crosstalk by a window of a housing of the electronic device 101 is detected based on intensity values of the second signals measured in distance areas of the distance detection sensor 210. The at least one processor 120 may be configured to provide a first notification indicating that the housing has been normally assembled based on identifying that the crosstalk by the window is detected. The at least one processor 120 may be configured to provide a second notification indicating that the housing is not normally assembled based on identifying that the crosstalk by the window is not detected.

According to an example embodiment, the at least one processor 120, to identify whether the crosstalk by the window is detected, may be configured to identify whether each of the second signals is less than a threshold. The at least one processor 120, to identify whether the crosstalk by the window is detected, may be configured to identify that the crosstalk by the window is detected each of intensity values of the second signals being less than the threshold.

According to an example embodiment, the distance detection sensor 210 may comprise a light emitting unit comprising light emitting circuitry configured to emit the first signal. The distance detection sensor 210 may comprise a light receiving unit including light receiving circuitry configured to receive reflected light from the distance areas.

According to an example embodiment, the distance areas may include a first distance area and a second distance area. A distance between the first distance area and the light emitting unit may be less than a distance between the second distance area and the light emitting unit. Based on the crosstalk by the window being detected, an intensity of a reflection signal measured in the first distance area may be greater than an intensity of a reflection signal measured in the second distance area.

According to an example embodiment, the at least one processor 120 may be further configured to identify whether a communication connection state with the distance detection sensor 210 is normal. According to an example embodiment, the at least one processor 120 may be further configured to display, through the display 230, a message requesting a confirmation of an assembly state of a connector of the distance detection sensor 210, based on the communication connection state with the distance detection sensor 210 being abnormal.

According to an example embodiment, the at least one processor 120, may be further configured to identify whether an ambient value obtained by the distance detection sensor 210 is greater than a threshold. The at least one processor 120, may be further configured to display, through the display 230, a message guiding a light source environment, based on the ambient value being greater than the threshold.

According to an example embodiment, the at least one processor 120, to identify whether the crosstalk by the window is detected, may be configured to detect crosstalk based on the second signals. The at least one processor 120, to identify whether the crosstalk by the window is detected, may be configured to determine whether the crosstalk is caused by a window of a housing of the electronic device 101 based on whether intensity values of the second signals are less than a threshold and distribution information on the intensity values of the second signals. The distribution information may indicate one or more distance areas corresponding to one or more upper intensity values among the intensity values of the second signals.

According to an example embodiment, the at least one processor 120, to identify whether the crosstalk by the window is detected, may be configured to detect crosstalk based on the second signals received through the distance detection sensor within a specified time from when the first signal is transmitted. The at least one processor 120, to identify whether the crosstalk by the window is detected, may be configured to determine whether the crosstalk is caused by a window of a housing of the electronic device based on whether intensity values of the second signals are less than a threshold.

According to an example embodiment, the at least one processor 120, to identify whether the crosstalk by the window is detected, may be configured to obtain peak signal strengths of the second signals. The at least one processor 120, to identify whether the crosstalk by the window is detected, may be configured to identify whether the housing is assembled to a body of the electronic device 101, based on a comparison result of the peak signal strengths of the second signals and a threshold.

According to an example embodiment, the at least one processor 120, to provide the second notification, may be configured to display, through the display 230, a message requesting confirmation of the assembly state of the housing or guiding that a removal of an external object is required.

According to an example embodiment, the distance detection sensor 210 may include a time of flight (TOF). The window may be configured with a glass material in a partial area of the housing. The window may be disposed such that one surface of the window faces the detection sensor in a state where the housing is assembled to the body of the electronic device 101.

In various example embodiments of the present disclosure, a method performed by the electronic device 101 may comprise receiving second signals from which a first signal transmitted through the distance detection sensor 210 of the electronic device 101 is reflected. The method may comprise identifying whether a crosstalk by a window of a housing of the electronic device 101 is detected based on intensity values of the second signals measured in distance areas of the distance detection sensor 210. The method may comprise providing a first notification indicating that the housing has been normally assembled based on identifying that the crosstalk by the window is detected. The method may comprise providing a second notification indicating that the housing is not normally assembled based on identifying that the crosstalk by the window is not detected.

According to an example embodiment, the identifying of whether the crosstalk by the window is detected, may comprise identifying whether each of the intensity values of the second signals is less than a threshold. The identifying of whether the crosstalk by the window is detected, may comprise identifying that the crosstalk by the window is detected based on each of the intensity values of the second signals being less than the threshold.

According to an example embodiment, the distance detection sensor 210 may comprise a light emitting unit comprising light emitting circuitry configured to emit the first signal. The distance detection sensor 210 may comprise a light receiving unit comprising light receiving circuitry configured to receive light from the distance areas.

According to an example embodiment, the distance areas may include a first distance area and a second distance area. A distance between the first distance area and the light emitting unit may be shorter than a distance between the second distance area and the light emitting unit. Based on the crosstalk by the window being detected, an intensity of a reflection signal measured in the first distance area may be greater than an intensity of a reflection signal measured in the second distance area.

According to an example embodiment, the method may comprise identifying whether a communication connection state with the distance detection sensor 210 is normal. The method may comprise displaying, through a display 230, a message requesting a confirmation of an assembly state of a connector of the distance detection sensor 210, based on the communication connection state with the distance detection sensor 210 being abnormal.

According to an example embodiment, the method may comprise identifying whether an ambient value obtained by the distance detection sensor 210 is greater than a threshold. The method may comprise displaying, through a display 230, a message guiding a light source environment, based on the ambient value being greater than the threshold.

According to an example embodiment, the identifying of whether the crosstalk by the window is detected, comprise detecting crosstalk based on the second signals. The identifying of whether the crosstalk by the window is detected, comprise determining whether the crosstalk is caused by a window of a housing of the electronic device 101 based on whether intensity values of the second signals are less than a threshold and distribution information on the intensity values of the second signals. The distribution information may indicate one or more distance areas corresponding to one or more upper intensity values among the intensity values of the second signals.

According to an example embodiment, the identifying of whether the crosstalk by the window is detected, may comprise detecting crosstalk based on the second signals received through the distance detection sensor within a specified time from when the first signal is transmitted. The identifying of whether the crosstalk by the window is detected, may comprise determining whether the crosstalk is caused by a window of a housing of the electronic device based on whether intensity values of the second signals are less than a threshold.

According to an example embodiment, the identifying of whether the crosstalk by the window is detected, may comprise obtaining peak signal strengths of the second signals. The identifying of whether the crosstalk by the window is detected, may comprise identifying whether the housing is assembled to a body of the electronic device 101, based on a comparison result of the peak signal strengths of the second signals and a threshold.

According to an example embodiment, the providing the second notification may include displaying, through the display 230, a message requesting confirmation of the assembly state of the housing or guiding that a removal of an external object is required.

According to an example embodiment, the distance detection sensor 210 may include a time of flight (TOF). The window may be configured with a glass material in a partial area of the housing. The window may be disposed such that one surface of the window faces the detection sensor in a state where the housing is assembled to the body of the electronic device 101.

In various example embodiments of the present disclosure, electronic device 101 may comprise at least one processor 120; a distance detection sensor 210; a display 230; and a memory configured to store instructions. The at least one processor 120, when the instructions are executed, may be configured to perform at least one of operations according to embodiments. The at least one processor 120, may be configured to identify that at least one condition among one or more check conditions for detecting a failure of a calibration state check for the distance detection sensor 210 is satisfied. The at least one processor 120, when the instructions are executed, may be configured to display, through the display 230, a notification to guide an action based on the at least one condition. The one or more check conditions may include a first condition in which a communication connection with the distance detection sensor 210 is abnormal. The one or more check conditions may include a second condition in which an ambient value being equal to or greater than a first threshold is detected. The one or more check conditions may include a third condition in which a peak signal being less than a second threshold is detected in response to a calibration error for the distance detection sensor 210. The one or more check conditions may include a fourth condition in which a peak signal being equal to or greater than the second threshold is detected in response to the calibration error for the distance detection sensor 210. The one or more check conditions may include a fifth condition in which a peak signal being equal to or greater than a third threshold is detected in response to a calibration of the distance detection sensor 210. The one or more check conditions may include at least one of the first condition, the second condition, the third condition, the fourth condition, or the fifth condition. The calibration may be performed based on a first signal transmitted through the distance detection sensor 210 and second signals from which the first signal is reflected.

According to an example embodiment, the calibration for the distance detection sensor 210 may include detection of crosstalk detected by the second signals.

In various example embodiments of the present disclosure, a method performed by the electronic device 101 may include identifying that at least one condition among one or more check conditions for detecting a failure of a calibration state check for the distance detection sensor 210 of the electronic device 101 is satisfied. The method may include displaying, through the display 230, a notification to guide an action based on the at least one condition. The one or more check conditions may include a first condition in which a communication connection with the distance detection sensor 210 is abnormal. The one or more check conditions may include a second condition in which an ambient value being equal to or greater than a first threshold is detected. The one or more check conditions may include a third condition in which a peak signal being less than a second threshold is detected in response to a calibration error for the distance detection sensor 210. The one or more check conditions may include a fourth condition in which a peak signal being equal to or greater than the second threshold is detected in response to the calibration error for the distance detection sensor 210. The one or more check conditions may include a fifth condition in which a peak signal being equal to or greater than a third threshold is detected in response to a calibration of the distance detection sensor 210. The one or more check conditions may include at least one of the first condition, the second condition, the third condition, the fourth condition, or the fifth condition. The calibration may be performed based on a first signal transmitted through the distance detection sensor 210 and second signals from which the first signal is reflected.

According to an example embodiment, the calibration for the distance detection sensor may include detection of crosstalk detected by the second signals.

Methods according to the various example embodiments described in the present disclosure may be implemented in the form of hardware, software, or a combination of hardware and software.

When implemented as software, a non-transitory computer-readable storage medium storing one or more program (software module) may be provided. The one or more program stored in the computer-readable storage medium is configured for execution by one or more processor in the electronic device. The one or more program may include instructions that cause the electronic device to execute methods according to various example embodiments described in the present disclosure.

Such program (software modules, software) may be stored in random access memory, non-volatile memory including flash memory, read only memory (ROM), electrically erasable programmable read only memory (EEPROM), magnetic disc storage device, compact disc-ROM (CD-ROM), digital versatile disc (DVD) or other form of optical storage, magnetic cassette. Alternatively, it may be stored in a memory configured with some or all combinations thereof. In addition, each configuration memory may be included a plurality.

In addition, the program may be stored in an attachable storage device that may be accessed through a communication network, such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may access a device performing an embodiment of the present disclosure.

In the above-described example embodiments of the present disclosure, the component included in the disclosure is expressed in singular or plural according to the presented specific embodiment. However, singular or plural expression is chosen appropriately for the situation presented for convenience of explanation, and the present disclosure is not limited to singular or plural component, and even if the component is expressed in plural, it may be configured with singular, or even if it is expressed in singular, it may be configured with plural.

While the disclosure has been illustrated and described with reference to various example embodiments, it will be understood that the various example embodiments are intended to be illustrative, not limiting. It will be further understood by those skilled in the art that various changes in form and detail may be made without departing from full scope of the disclosure, including the appended claims and their equivalents. It will also be understood that any of the embodiment(s) described herein may be used in conjunction with any other embodiment(s) described herein.

## Claims

1. An electronic device, the electronic device comprising:
at least one processor;
a distance detection sensor;
a display; and
a memory configured to store instructions,
wherein the at least one processor, when the instructions are executed, is configured to:
receive, through the distance detection sensor, second signals from which a first signal transmitted through the distance detection sensor is reflected;
identify whether a crosstalk by a window of a housing of the electronic device is detected based on intensity values of the second signals measured in distance areas of the distance detection sensor;
provide a first notification indicating that the housing has been normally assembled based on identifying that the crosstalk by the window is detected; and
provide a second notification indicating that the housing is not normally assembled based on identifying that the crosstalk by the window is not detected.

2. The electronic device of claim 1,
wherein the at least one processor, to identify whether the crosstalk by the window is detected, is configured to:
identify whether each of the intensity values of the second signals is less than a threshold, and
identify that the crosstalk by the window is detected based on each of intensity values of the second signals being less than the threshold.

3. The electronic device of claim 1,
wherein the distance detection sensor comprises a light emitting unit comprising light emitting circuitry configured to emit the first signal, and
wherein the distance detection sensor comprises a light receiving unit including light receiving circuitry configured to receive reflected light from the distance areas.

4. The electronic device of claim 3,
wherein the distance areas include a first distance area and a second distance area,
wherein a distance between the first distance area and the light emitting unit is less than a distance between the second distance area and the light emitting unit,
wherein, based on the crosstalk by the window being detected, an intensity of a reflection signal measured in the first distance area is greater than an intensity of a reflection signal measured in the second distance area.

5. The electronic device of claim 1,
wherein the at least one processor is further configured to:
identify whether a communication connection state with the distance detection sensor is normal, and
display, through the display, a message requesting a confirmation of an assembly state of a connector of the distance detection sensor, based on the communication connection state with the distance detection sensor being abnormal.

6. The electronic device of claim 1,
wherein the at least one processor is further configured to:
identify whether an ambient value obtained by the distance detection sensor is greater than or equal to a threshold, and
display, through the display, a message guiding a light source environment, based on the ambient value being greater than or equal to the threshold.

7. The electronic device of claim 1,
wherein the at least one processor, to identify whether the crosstalk by the window is detected, is configured to:
detect crosstalk based on the second signals, and
determine whether the crosstalk is caused by a window of a housing of the electronic device based on whether intensity values of the second signals are less than a threshold and distribution information on the intensity values of the second signals, and
wherein the distribution information indicates one or more distance areas corresponding to one or more upper intensity values among the intensity values of the second signals.

8. The electronic device of claim 1,
wherein the at least one processor, to identify whether the crosstalk by the window is detected, is configured to:
detect crosstalk based on the second signals received through the distance detection sensor within a specified time from when the first signal is transmitted, and
determine whether the crosstalk is caused by a window of a housing of the electronic device based on whether intensity values of the second signals are less than a threshold.

9. The electronic device of claim 1,
wherein the at least one processor, to identify whether the crosstalk by the window is detected, is configured to:
obtain peak signal strengths of the second signals, and
identify whether the housing is assembled to a body of the electronic device, based on a comparison result of the peak signal strengths of the second signals and a threshold.

10. The electronic device of claim 1,
wherein the at least one processor, to provide the second notification, is configured to display, through the display, a message requesting confirmation of the assembly state of the housing or guiding that a removal of an external object is required.

11. A method performed by an electronic device, the method comprising:
receiving, through a distance detection sensor of the electronic device, second signals from which a first signal transmitted through the distance detection sensor is reflected;
identifying whether a crosstalk by a window of a housing of the electronic device is detected based on intensity values of the second signals measured in distance areas of the distance detection sensor;
providing a first notification indicating that the housing has been normally assembled based on identifying that the crosstalk by the window is detected; and
providing a second notification indicating that the housing is not normally assembled based on identifying that the crosstalk by the window is not detected.

12. The method of claim 11,
wherein the identifying of whether the crosstalk by the window is detected, comprises:
identifying whether each of the intensity values of the second signals is less than a threshold, and
identifying that the crosstalk by the window is detected based on each of the intensity values of the second signals being less than the threshold.

13. The method of claim 11,
wherein the distance detection sensor comprises a light emitting unit comprising light emitting circuitry configured to emit the first signal, and
wherein the distance detection sensor comprises a light receiving unit comprising light receiving circuitry configured to receive light from the distance areas.

14. The method of claim 11,
wherein the distance areas include a first distance area and a second distance area,
wherein a distance between the first distance area and the light emitting unit is shorter than a distance between the second distance area and the light emitting unit,
wherein, based on the crosstalk by the window being detected, an intensity of a reflection signal measured in the first distance area is greater than an intensity of a reflection signal measured in the second distance area.

15. The method of claim 11, further comprising:
identifying whether a communication connection state with the distance detection sensor is normal , and
displaying, through a display, a message requesting a confirmation of an assembly state of a connector of the distance detection sensor, based on the communication connection state with the distance detection sensor being abnormal.
